# EUROPÄISCHE PATENTSCHRIFT

(11) **EP 3 067 115 B1**
(45) Veröffentlichungstag und Bekanntmachung des Hinweises auf die Patenterteilung: **31.10.2018**
(21) Anmeldenummer: 16165339.9
(22) Anmeldetag: 03.07.2009
(51) Int. Cl.: B01J 10/00, B01J 19/24, B01J 8/02, C01B 17/16

(54) **REAKTIONSBEHÄLTER UND DESSEN VERWENDUNG**
REACTION VESSEL AND ITS USE
RECIPIENT DE REACTION SON UTILISATION

(30) Priorität: 18.07.2008 DE 102008040544
(43) Veröffentlichungstag der Anmeldung: 14.09.2016
(62) Teilanmeldung aus: 09780121.1
(73) Patentinhaber: Evonik Degussa GmbH, 45128 Essen (DE)
(72) Erfinder: Redlingshöfer, Hubert, 91481 Münchsteinach (DE); Barth, Jan-Olaf, 40591 Düsseldorf (DE); Finkeldei, Caspar-Heinrich, 63755 Alzenau (DE); Hasselbach, Hans Joachim, 63571 Gelnhausen (DE); Kretz, Stephan, 63599 Biebergemünd (DE); Heinzel, Harald, 79238 Ehrenkirchen (DE); Weckbecker, Christoph, 63584 Gründau (DE)

(56) Entgegenhaltungen:
- EP-A- 0 339 818
- EP-A2- 0 461 855
- DE-C- 558 432
- US-A- 2 876 070
- US-A- 2 876 071
- US-A- 2 877 099

## Beschreibung

Die Erfindung betrifft einen Reaktionsbehälter, geeignet zur Durchführung einer exothermen Umsetzung eines flüssigen Reaktanden mit einem gasförmigen Reaktanden zu einem gasförmigen Reaktionsprodukt bei erhöhter Temperatur und erhöhtem Druck, bei dem man durch nicht drucktragende Einbauten die Verweilzeit des gasförmigen Reaktanden im Reaktionsbehälter erhöht.

In einem derartigen Reaktionsbehälter wird bevorzugt Schwefelwasserstoff aus Schwefel und Wasserstoff hergestellt. Der Reaktionsbehälter enthält Einbauten, die die Verweilzeit des Wasserstoffs im flüssigen Schwefel erhöhen, wobei das Gas in Teilen dieser Einbauten gesammelt und anschließend wieder im flüssigen Schwefel verteilt wird.

Insbesondere Schwefelwasserstoff ist ein industriell wichtiges Zwischenprodukt zum Beispiel für die Synthese von Methylmercaptan, Dimethylsulfid, Dimethyldisulfid, Sulfonsäuren, Dimethylsulfoxid, Dimethylsulfon sowie für zahlreiche Sulfidierungsreaktionen. Es wird heute überwiegend aus der Erdöl- und Erdgasaufbereitung sowie durch Reaktion von Schwefel und Wasserstoff gewonnen.

Die Synthese von Schwefelwasserstoff aus den Elementen Wasserstoff und Schwefel erfolgt üblicherweise durch Einleiten von Wasserstoff in flüssigen Schwefel und einem nachgeschalteten Reaktionsraum in der Gasphase. Dabei sind sowohl katalysierte als auch unkatalysierte Verfahren bekannt. Die Synthese des Schwefelwasserstoffs erfolgt gewöhnlich in der Gasphase bei Temperaturen zwischen 300 und 600°C und bei Drücken zwischen 1 und 30 bar. Die industrielle Produktion von Schwefelwasserstoff aus den Elementen verläuft nach Ullmann's Encyclopedia of Industrial Chemistry, Wiley-VCH, 2002 bei Temperaturen von 450 °C und einem Druck von 7 bar.

Das US-Patent 2,876,071 A offenbart einen Reaktionsbehälter geeignet zur Durchführung einer exothermen Umsetzung eines flüssigen mit einem gasförmigen Reaktanden zu einem gasförmigen Reaktionsprodukt bei erhöhter Temperatur und erhöhtem Druck. In diesem Reaktionsbehälter sind nicht drucktragende Einbauten in Form von umgedrehten Tassen angeordnet, die die Verweilzeit des gasförmigen Reaktanden erhöhten. Ferner sind die Einbauten von der Wand des Reaktionsbehälters getrennt, so dass die flüssige Phase zwischen den zwei Wänden wieder nach unten fließen kann.

Auch das US-Patent 2,877,099 A offenbart einen Reaktionsbehälter, der zur Durchführung einer exothermen Reaktion eines flüssigen mit einem gasförmigen Reaktanden geeignet ist. In diesem Reaktionsbehälter sind nicht drucktragende Einbauten in Form von umgedrehten Kavernen auf jedem Boden angeordnet, durch welche die Verweilzeit des gasförmigen Reaktanden erhöht, und die von dem flüssigen Reaktanden umgeben sein können. Diese Einbauten sind durch Wände von der Wand des Reaktionsbehälters getrennt, so dass die flüssige Phase zwischen den zwei Wänden nach unten zirkulieren kann.

Die Offenlegungsschrift EP 0461855 A2 offenbart einen zur Durchführung einer exothermen Umsetzung eines gasförmigen mit einem flüssigen Reaktanden geeigneten Reaktionsbehälter bei dem umgekehrte Tassen auf einem Destillationsboden angeordnet sind. Das Dokument offenbart auch, dass die Einbauten durch eine Wand von der Wand des Reaktionsbehälters getrennt sind, so dass die flüssige Phase zwischen den zwei Wänden nach unten zirkulieren kann.

Die Offenlegungsschrift EP 0339818 A1 offenbart die Durchführung der katalysierten Synthese von Schwefelwasserstoff durch Umsetzung von Wasserstoff mit Schwefel in einem Reaktionsbehälter, bei der ein entsprechender Katalysator auf Basis von Oxiden oder Sulfiden von Cobalt-Molybdän bzw. Nickel-Molybdän oder Nickelsulfid in der Schwefelschmelze suspendiert ist.

In der GB 1193040 ist die unkatalysierte Synthese von Schwefelwasserstoff bei relativ hohen Temperaturen von 400 bis 600 °C und Drücken von 4 bis 15 bar beschrieben. Es wird angegeben, dass die erforderliche Temperatur vom Druck bestimmt wird, bei dem die Synthese ablaufen soll. Bei einem Druck von 9 bar sind demnach etwa 500 °C erforderlich.

Ein wesentlicher Punkt bei der Herstellung von Schwefelwasserstoff aus Schwefel und Wasserstoff ist vor allem die Temperaturführung. Hohe Temperaturen sind notwendig, um einen Gleichgewichtszustand zu erreichen, bei dem sich ein Molverhältnis Wasserstoff:Schwefel in der Gasphase von etwa 1:1 einstellt. Erst dies ermöglicht die Synthese von reinem Schwefelwasserstoff. Mit zunehmendem Druck ist die Temperatur entsprechend der Dampfdruckkurve von Schwefel stark zu erhöhen, um das angestrebte Molverhältnis von 1:1 in der Gasphase zu erreichen. Dabei sind schon geringe Unterschiede im Druck von z. B. 1 bar und weniger von großer Bedeutung.

CSSR 190792 beschreibt eine Verfahrensvariante zur Herstellung von Schwefelwasserstoff, wobei hohe Reaktionstemperaturen durch eine vergleichsweise aufwendige Reihenschaltung von mehreren Reaktoren vermieden werden. Hohe Temperaturen werden dort speziell aufgrund von Korrosionsproblemen vermieden. In CSSR 190793 wird von starker Korrosion der Anlage ab Temperaturen von 400 °C berichtet.

Auch in US 4094961 wird bei der Synthese von Schwefelwasserstoff von schwerer Korrosion bei Temperaturen von 440 bis 540 °C berichtet. Deshalb wird die Synthese dort nur bei Temperaturen unterhalb von 440 °C durchgeführt.

Der Artikel von B. Glaser, M. Schütze, F. Vollhardt zu "Auswertung von Daten zum H2S-Angriff auf Stähle bei verschiedenen Temperaturen und Konzentrationen", Werkstoffe und Korrosion 42, 374-376, 1991 beschreibt, dass für Anlagen, in denen ein korrosiver Angriff durch H₂S bei erhöhten Temperaturen zu befürchten ist, dieser die Weiterentwicklung solcher Anlagen wesentlich behindert. Insbesondere bleibt bisher der Übergang zu höheren Temperaturen und damit zu einer wirtschaftlichen Verbesserung der entsprechenden Verfahren verschlossen, da in diesem Fall bereits nach kurzen Zeiten massive Korrosionsschäden und damit ein Ausfall der Anlagen eintreten. Als Haupteinflussfaktoren auf die Korrosion werden die Temperatur und die H2S-Konzentration genannt.

Je nach weiterem Verwendungszweck von Schwefelwasserstoff kann es von großem Vorteil sein, den Schwefelwasserstoff bei höherem Druck bereitzustellen und nicht separat verdichten zu müssen.

Für die Wirtschaftlichkeit des Verfahrens werden möglichst niedrige Investitions- und Betriebskosten gefordert. Hier stellt insbesondere der Aufwand für Apparate und Maschinen aber auch der Energieaufwand zur Synthese bzw. Aufbereitung des Eduktgasgemisches einen hohen Kostenfaktor dar. Z.B. werden große elektrische Leistungen für den Betrieb von Verdichtern und von Heiz- und Kühlkreisläufen benötigt.

Aufgabe der Erfindung ist es, einen Reaktionsbehälter zur Durchführung einer exothermen Umsetzung eines flüssigen Reaktanten mit einem oder mehreren gasförmigen Reaktanten zu einem Reaktionsprodukt bei erhöhter Temperatur und erhöhtem Druck bereitzustellen.

Die Erfindung betrifft einen Reaktionsbehälter, geeignet zur Durchführung einer exothermen Umsetzung eines flüssigen Reaktanden mit einem oder mehreren, insbesondere einen gasförmigen Reaktanden zu einem gasförmigen Reaktionsprodukt bei erhöhter Temperatur und erhöhtem Druck, bei dem man durch nicht drucktragende Einbauten die Verweilzeit des/der gasförmigen Reaktanden im Reaktionsbehälter erhöht.

Dabei ist dem Fachmann klar, dass der flüssige Reaktand im Allgemeinen vor der Umsetzung in den gasförmigen Zustand übergeht. Die nicht drucktragenden Einbauten sind von den flüssigen Reaktanden umgeben.

Bezogen auf die Herstellung von Schwefelwasserstoff erhöhen die Einbauten, die Verweilzeit, insbesondere des Wasserstoffs im flüssigen Schwefel. Der/die gasförmigen Reaktanden wird/werden zumindest teilweise in diesen Einbauten gesammelt und verteilen sich anschließend wieder im flüssigen Schwefel, soweit sie nicht zu Schwefelwasserstoff umgesetzt wurden.

Während des Einperlens von Wasserstoff in flüssigen Schwefel wird der Wasserstoff mit gasförmigem Schwefel gesättigt und in einer stark exothermen Reaktion in der Gasphase zu Schwefelwasserstoff umgesetzt. Dies kann durch einen Katalysator beschleunigt werden oder auch ohne Katalysator bei deutlich höheren Temperaturen erfolgen. Um auch bei hohem Druck ausreichend Schwefel in die Gasphase zu überführen und vollständigen Umsatz von Wasserstoff zu erreichen, sind hohe Temperaturen, bevorzugt von über 400°C erforderlich. Durch die Exothermie der Reaktion entsteht jedoch so viel Wärme, dass bei einer Temperatur des flüssigen Schwefels von ca. 400°C lokal in Reaktorbereichen oberhalb des flüssigen Schwefels nach dem Stand der Technik Temperaturen deutlich > 450°C auftreten. Diese führen zu einer starken Belastung der Werkstoffe und Korrosion und machen eine technisch aufwendige Kühlung notwendig.

Es wurden jetzt Reaktorkonzepte für derartige exotherme Synthesen bei höherem Druck gefunden, die hohe Übertemperaturen an drucktragenden Teilen vermeiden helfen. Gleichzeitig werden lokale Übertemperaturen im Bereich der Einbauten gezielt genutzt, um eine schnelle sowie vollständige Umsetzung des Wasserstoffs mit hoher Raum-Zeit-Ausbeute zu ermöglichen. Mit diesem Reaktorkonzept läßt sich darüber hinaus die Reaktionswärme für die Erwärmung und Verdampfung der Edukte, hier Schwefel, nutzen. Für die Wärmeintegration können so die Edukte selbst genutzt werden.

Durch die erfindungsgemäße Anordnung von Gassammelbereichen und Gasfangbereichen in Form von umgedrehten Tassen oder Kavernen als nicht drucktragenden Einbauten wird der mit Schwefel gesättigte in der flüssigen Schwefelphase fein verteilte Wasserstoff wieder als zusammenhängende Gasphase dort gesammelt. Die Verweilzeit der gasförmigen Reaktanden in diesen Gassammelbereichen bzw. Gasfangkonstruktionen ist im Vergleich zur Verweilzeit von aufsteigenden Gasblasen in Reaktoren ohne Einbauten deutlich, d.h.
um etwa den Faktor 3 bis 20, insbesondere 5 bis 15 erhöht. Ist die Verweilzeit des Wasserstoffs im flüssigen Schwefel zu kurz, sammelt sich mit gasförmigem Schwefel angereicherter Wasserstoff im Bereich oberhalb des flüssigen Schwefels im Reaktor und setzt sich zu Schwefelwasserstoff um. Daraus folgt, dass sich Reaktionsbehälter ohne die erfindungsgemäßen Einbauten durch die freiwerdende Wärmemenge oberhalb des flüssigen Schwefels stark erhitzen, da die Energie nicht zufriedenstellend abgeführt werden kann. Erfindungsgemäß tritt aufgrund der erhöhten Verweilzeit im mit flüssigem Schwefel gefüllten Bereich des Reaktors kein Reaktionsgemisch in den Raum oberhalb des flüssigen Schwefels ein. Erfindungsgemäß führt daher die entstehende Wärmemenge nur innerhalb der Gassammelbereiche bzw. Gasfangkonstruktion zu einer Erhöhung der Temperatur über 450°C, welche an dieser Stelle das Fortschreiten der Reaktion und die Verdampfung von Schwefel fördert. Durch die lokale Begrenzung der Umsetzung und damit der entstehenden Übertemperaturen auf den Bereich der Einbauten wird der gesamte drucktragende Reaktionsbehälter und besonders der Bereich oberhalb des flüssigen Schwefels nicht auf Temperaturen > 450°C erhitzt und so eine durch diese erhöhten Temperaturen bedingte Schädigung des Werkstoffs vermieden. Erfindungsgemäß erfolgt das Sammeln und Verteilen der Gasphase innerhalb eines Reaktionsbehälters durch die Anordnung der Einbauten mehrmals. Es werden drei bis hundert, bevorzugt 3 bis 50 Gassammelbereiche übereinander angeordnet. Dazwischen können Gasverteiler installiert werden.

Die Verweilzeit der gasförmigen Reaktanden Wasserstoff und Schwefel, insbesondere des Wasserstoffs in einem als Gassammelbereich oder Gasfangbereich wirkenden Einbau beträgt bevorzugt mehr als 0,5 s bis 60 s, besonders bevorzugt zwischen 2 und 60 s, insbesondere zwischen 3 und 30 s. Die in den Gassammelbereichen bzw. den Einbauten vorliegenden Temperaturen können mehr als 550 °C betragen. Diese Temperaturen wären für den drucktragenden Mantel aus Korrosions- und Sicherheitsgründen nicht tolerierbar. Werden mehrere Gasfangkonstruktionen in einem Reaktionsbehälter angeordnet, so erfolgt dies bevorzugt in Strömungsrichtung des aufsteigenden Wasserstoffs. Die Größe der Gassammel- oder Gasfangvolumina der einzelnen Einbauten kann dabei zu-, abnehmen oder konstant sein. Erfindungsgemäß ist eine Zunahme der Sammelvolumina in Strömungsrichtung, um die mit der Verringerung z. B. der Wasserstoffkonzentration im Wasserstoff-Schwefel-Gasgemisch sich verlangsamende Reaktionsgeschwindigkeit durch eine höhere Verweilzeit auszugleichen.

Gegenstand der vorliegenden Erfindung ist daher ein Reaktionsbehälter, geeignet zur Durchführung einer exothermen Umsetzung eines flüssigen Reaktanden mit einem oder mehreren gasförmigen Reaktanden zu einem gasförmigen Reaktionsprodukt bei erhöhter Temperatur und erhöhtem Druck, bei dem man

Gassammelbereiche und Gasfangbereiche in Form von umgedrehten Tassen oder Kavernen, Bodenkonstruktionen mit Gassammlern und Gasverteilern, oder Kombinationen davon als nicht drucktragende Einbauten einsetzt und durch die nicht drucktragenden Einbauten die Verweilzeit der/des gasförmigen Reaktanden im Reaktionsbehälter erhöht und die nicht drucktragenden Einbauten so angeordnet sind, dass sie von dem flüssigen Reaktanden umgeben werden, wobei der Reaktionsbehälter drei bis 100 nicht drucktragende Einbauten übereinander angeordnet enthält und die Größe der Einbauten in Strömungsrichtung des aufsteigenden gasförmigen Reaktanden zunimmt, wobei die Einbauten durch eine Wand von der Wand des Reaktionsbehälters getrennt sind, in der Weise, dass durch den sich aus dem Abstand zwischen der genannten Wände ergebendem Raum der flüssige Reaktand entgegen der Steigrichtung des aufsteigenden gasförmigen Reaktanden zirkuliert.

Zur Vermeidung von Temperaturen über 450°C an den drucktragenden Behälterwänden durch die Exothermie der Reaktion sind die Einbauten von flüssigem Schwefel umgeben. Die Gassammelbereiche und zugehörige Einbauten werden durch den umgebenden flüssigen Schwefel gekühlt.

Erfindungsgemäß wird eine Strömungsverteilung des flüssigen Reaktanden, insbesondere des Schwefels realisiert, welche eine Zirkulation des Schwefels und somit eine gute Wärmeverteilung ermöglicht. Insbesondere im flüssigkeitsgefüllten Raum zwischen den Einbauten und dem drucktragenden Mantel wird auf eine Schwefel-Zirkulation geachtet. Auch durch den Ort der Zuführung des frischen Schwefels und/oder durch Rückführungen von nicht umgesetztem Schwefel kann die Zirkulation und der Wärmehaushalt im Reaktor gezielt gesteuert werden. Bevorzugt werden die Schwefelzu- und rückführungen zur Kühlung der Innenseite des drucktragenden Mantels und zur Kühlung des Produktgases eingesetzt.

Die Gassammelbereiche oder Gasfangbereiche und zugehörige Einbauten sind bevorzugt an einem oder mehreren Innenrohren fixiert und stehen im Druckbehälter. Für die Fertigung und Montage des Reaktionsbehälters werden dem Fachmann bekannte Verfahren wie beispielsweise Schweißen verwendet.

In diesem Zusammenhang können ebenfalls geeignete Zusatzwerkstoffe zur Oberflächenbehandlung oder zum Verbinden von Bauteilen wie beispielsweise Schweißzusatzwerkstoffe eingesetzt werden. Auch der Einsatz von Sonderwerkstoffen oder Keramiken ist hier aufgrund hoher Temperaturen vorteilhaft. Wird für die Gasfangkonstruktionen gebräuchlicher Edelstahl eingesetzt, so wird dieser dort bevorzugt mit einem Korrosionszuschlag von mehr als 1 mm ausgeführt.

In einer bevorzugten Ausführungsform der Erfindung sind die Einbauten so angebracht, dass sie von oben aus dem Reaktor gezogen werden können, beispielsweise unter Zuhilfenahme eines Krans.

Die Temperaturen bei der Synthese von Schwefelwasserstoff liegen im Bereich von 300 bis 600 °C, insbesondere ca. 400 bis 600 °C. An den drucktragenden Teilen des Reaktionsbehälters liegt die Temperatur unterhalb der an den Einbauten sich einstellenden Temperatur, bevorzugt nicht > 450°C, besonders bevorzugt weniger als 450°C. In den Gassammelbereichen oder Gasfangbereichen bzw. den Einbauten liegen bevorzugt Temperaturen oberhalb von 450 °C vor, insbesondere bis 600°C.

Die nicht mit flüssigem Schwefel bedeckten Flächen des Reaktors befinden sich bevorzugt oberhalb des flüssigen Schwefels und sind nicht auf Temperaturen > 450°C erhitzt.

Bezüglich der Form bestehen für den Reaktionsbehälter keine besonderen Einschränkungen. Der Behälter hat bevorzugt eine zylindrische Form. Die als Gassammelbereiche oder Gasfangbereiche wirkenden nicht drucktragenden Einbauten liegen in Form von umgedrehten Tassen oder Kavernen, Bodenkonstruktionen mit Gassammlern und Gasverteilern, oder Kombinationen davon vor.

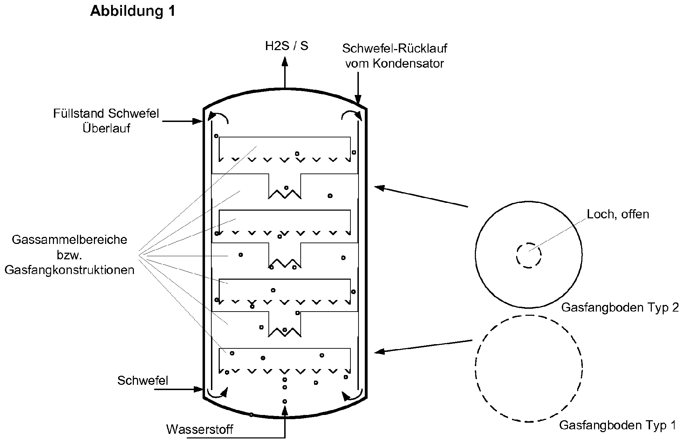

Die Figur 1 gibt ein Beispiel für eine Ausführungsform wieder

Der Fachmann ist in der Auswahl der zu kombinierenden Verfahrensschritte zur Herstellung von Schwefelwasserstoff frei, wobei auch mehrere der erfindungsgemäßen Reaktionsbehälter und verschiedene Apparate zur Abtrennung von Nebenprodukten oder unverbrauchten Einsatzstoffen kombiniert werden können.

Im Allgemeinen führt man das Verfahren bei einem Druck von 5 bis 20 bar durch und leitet Wasserstoff bei diesem Druck in den erfindungsgemäßen Reaktionsbehälter in flüssigen Schwefel.

Weiterhin kann die Umsetzung insbesondere zu Schwefelwasserstoff erfindungsgemäß auch in Gegenwart eines an sich bekannten heterogenen Katalysators ablaufen. Dabei handelt es sich bevorzugt um einen schwefelbeständigen Hydrierkatalysator, der bevorzugt aus einem Träger wie beispielsweise Siliziumoxid, Aluminiumoxid, Zirkoniumoxid oder Titanoxid besteht sowie eines oder mehrere der aktiven Elemente Molybdän, Nickel, Wolfram, Eisen, Vanadium, Kobalt, Schwefel, Selen, Phosphor, Arsen, Antimon und Wismut enthält. Der Katalysator kann sowohl in der Flüssigphase als auch in der Gasphase eingesetzt werden. Der Katalysator kann in Form von Pelletschüttungen, als suspendiertes Pulver im flüssigen Schwefel, als Beschichtung an Füllkörpern, Monolithen oder Gestricken vorliegen. Der Katalysator kann an einem oder an mehreren Orten im Reaktionsbehälter angebracht sein. Bevorzugt wird der Katalysator in den als Gassammelbereichen wirkenden Einbauten angebracht. Zur Sicherstellung eines kompletten Wasserstoffumsatzes wird in einer weiteren Ausführungsform der Erfindung eine Katalysatorschüttung oberhalb des flüssigen Schwefels und aller Gasfangkonstruktionen angebracht. Möglich ist auch eine Katalysatorschüttung, die vom flüssigen Schwefel umschlossen ist.

Anstelle von reinem Wasserstoff kann auch verunreinigter Wasserstoff durch den flüssigen Schwefel geleitet werden. Die Verunreinigungen können beispielsweise Kohlendioxid, Schwefelwasserstoff, Wasser, Methanol, Methan, Ethan, Propan, oder andere leichtflüchtige Kohlenwasserstoffe sein. Bevorzugt wird Wasserstoff mit einer Reinheit größer als 65 Vol.-% bis 100 Vol.-% eingesetzt, wovon bevorzugt mehr als 98 % bis 100 Vol.-% des eingesetzten Wasserstoffs zu Schwefelwasserstoff umgesetzt werden. Die Verunreinigungen im Wasserstoff oder deren Reaktionsprodukte werden bevorzugt vor der Synthese von Methylmercaptan nicht abgetrennt, sondern im Eduktgemisch belassen. Auch der verwendete Schwefel kann unterschiedliche Verunreinigungen enthalten.

Insgesamt kann durch die Erfindung einerseits ein wirtschaftlicherer Betrieb von Produktionsanlagen für Schwefelwasserstoff speziell bei Drücken > 5 bar ermöglicht werden, da der Reaktionsbehälter auch bei langem Betrieb von mehreren Jahren oder Jahrzehnten nur wenig gewartet, repariert und nicht teilweise oder vollständig ersetzt werden muss. Durch den erfindungsgemäßen Reaktionsbehälter wird das Auftreten von Übertemperaturen an drucktragenden Teilen vermieden und dadurch die Anlagensicherheit erhöht, weil verringerte Korrosion in diesem Bereich die Gefahr des Materialversagens und die Wahrscheinlichkeit von Unfällen durch den Austritt von Gefahrstoffen minimiert wird. Dies ist von besonderer Bedeutung bei sehr giftigen Stoffen wie Schwefelwasserstoff.

Ein weiterer Gegenstand der vorliegenden Erfindung ist daher auch die Verwendung eines erfindungsgemäßen Reaktionsbehälters für die Umsetzung von flüssigen Schwefel mit gasförmigem Wasserstoff zu Schwefelwasserstoff.

### Vergleichsbeispiel 1:

In ein Rohr mit einem Innendurchmesser von 5 cm, das bis zu einer Höhe von 1 m mit flüssigem Schwefel gefüllt war, wurden kontinuierlich 1000 Nl/h Wasserstoff über eine Fritte am Boden eingespeist. Der Verbrauch an Schwefel wurde durch Nachdosieren von flüssigem Schwefel ausgeglichen, wobei der Füllstand konstant gehalten wurde. Aus dem Produktgasstrom durch Kondensation abgetrennter Schwefel wurde flüssig in den oberen Bereich des Rohres zurückgeführt. Oberhalb des flüssigen Schwefels waren in Abständen von 10 cm Mantelthermoelemente zur Temperaturmessung angebracht. Während der Reaktor über die Außenwand elektrisch auf 400 °C beheizt wurde, lag innerhalb des Schwefels eine gleichmäßige Temperatur von etwa 397 °C vor. Die Thermoelemente oberhalb des Schwefels zeigten jedoch eine maximale Temperatur von 520 °C. Weiterhin waren oberhalb des flüssigen Schwefels neue Werkstoffproben an der Stelle der maximalen Temperatur aus gebräuchlichen Edelstahl (1.4571) angebracht. Nach einer Betriebszeit von etwa 400 h wurden die Werkstoffproben entnommen und zeigten starke Korrosionserscheinungen in Form von Abplatzungen und Gewichtsverlust an.

### Vergleichsbeispiel 2:

Vergleichsbeispiel 1 wurde wiederholt, wobei die Höhe des flüssigen Schwefels auf 4 m erhöht wurde. Der Wert der maximalen Temperatur oberhalb des flüssigen Schwefels blieb bestehen. An den Werkstoffproben traten ebenfalls starke Korrosionserscheinungen auf.

### Vergleichsbeispiel 3:

Vergleichsbeispiel 2 wurde wiederholt, wobei im flüssigen Schwefel 15 Gew.-% eines pulverförmigen Co₃O₄MoO₃/Al₂O₃-Katalysators suspendiert wurden. Der Wert der maximalen Temperatur oberhalb des flüssigen Schwefels blieb bestehen. An den Werkstoffproben traten ebenfalls starke Korrosionserscheinungen auf.

## Patentansprüche

1. Reaktionsbehälter, geeignet zur Durchführung einer exothermen Umsetzung eines flüssigen Reaktanden mit einem oder mehreren gasförmigen Reaktanden zu einem gasförmigen Reaktionsprodukt bei erhöhter Temperatur und erhöhtem Druck, bei dem man Gassammelbereiche und Gasfangbereiche in Form von umgedrehten Tassen oder Kavernen, Bodenkonstruktionen mit Gassammlern und Gasverteilern oder Kombinationen davon als nicht drucktragende Einbauten einsetzt und durch die nicht drucktragenden Einbauten die Verweilzeit der/des gasförmigen Reaktanden im Reaktionsbehälter erhöht und die nicht drucktragenden Einbauten so angeordnet sind, dass sie von dem flüssigen Reaktanden umgeben werden, wobei der Reaktionsbehälter drei bis 100 nicht drucktragende Einbauten übereinander angeordnet enthält und die Größe der Einbauten in Strömungsrichtung des aufsteigenden gasförmigen Reaktanden zunimmt, wobei die Einbauten durch eine Wand von der Wand des Reaktionsbehälters getrennt sind, in der Weise, dass durch den sich aus dem Abstand zwischen der genannten Wände ergebendem Raum der flüssige Reaktand entgegen der Steigrichtung des aufsteigenden gasförmigen Reaktanden zirkuliert.

2. Reaktionsbehälter bei dem Gasverteiler zwischen den Gassammelbereichen und Gasfangbereichen installiert sind.

3. Reaktionsbehälter gemäß Anspruch 1, bei dem die Einbauten an einem oder mehreren Innenrohren fixiert sind und im Druckbehälter stehen.

4. Reaktionsbehälter gemäß Anspruch 1, bei dem ein Katalysator sich innerhalb des Gassammelbereichs befindet.

5. Reaktionsbehälter gemäß Anspruch 4, bei dem der Katalysator ein schwefelbeständiger Hydrierkatalysator ist.

6. Reaktionsbehälter gemäß Anspruch 5, bei dem der Katalysator aus einem Träger besteht und eines oder mehrere der aktiven Elemente Molybdän, Nickel, Wolfram, Eisen, Vanadium, Kobalt, Schwefel, Selen, Phosphor, Arsen, Antimon und Wismut enthält.

7. Verwendung eines Reaktionsbehälters gemäß den Ansprüchen 1 bis 6 für die Umsetzung von flüssigem Schwefel mit gasförmigem Wasserstoff zu Schwefelwasserstoff.

## Claims

1. Reaction vessel suitable for carrying out an exothermic reaction of a liquid reactant with one or more gaseous reactants to form a gaseous reaction product at elevated temperature and elevated pressure, wherein gas collection regions and gas capture regions in the form of upturned cups or caverns, tray constructions having gas collectors and gas distributors or combinations thereof are used as non-pressure-bearing internals and the residence time of the gaseous reactant(s) in the reaction vessel is increased by the non-pressure-bearing internals and the non-pressure-bearing internals are arranged so that they are surrounded by the liquid reactant, where the reaction vessel contains from three to 100 non-pressure-bearing internals arranged above one another and the size of the internals increases in the flow direction of the ascending gaseous reactant, where the internals are separated by a wall from the wall of the reaction vessel in such a way that the liquid reactant circulates through the space arising from the spacing between the said walls in the opposite direction to the direction of ascension of the ascending gaseous reactant.

2. Reaction vessel in which gas distributors are installed between the gas collection regions and gas capture regions.

3. Reaction vessel according to Claim 1, wherein the internals are fixed on one or more internal tubes and are located in the pressure vessel.

4. Reaction vessel according to Claim 1, wherein a catalyst is present within the gas collection region.

5. Reaction vessel according to Claim 4, wherein the catalyst is a sulfur-resistant hydrogenation catalyst.

6. Reaction vessel according to Claim 5, wherein the catalyst consists of a support and contains one or more of the active elements molybdenum, nickel, tungsten, iron, vanadium, cobalt, sulfur, selenium, phosphorus, arsenic, antimony and bismuth.

7. Use of a reaction vessel according to any of Claims 1 to 6 for the reaction of liquid sulfur with gaseous hydrogen to form hydrogen sulfide.

## Revendications

1. Cuve de réaction, approprié pour la réalisation d'une réaction exothermique d'un réactif liquide avec un ou plusieurs réactifs gazeux pour former un produit de réaction gazeux à température élevée et pression élevée, dans lequel des zones de collecte de gaz et des zones de capture de gaz sous la forme de tasses inversées ou de cavernes, des constructions de plateaux munies de collecteurs de gaz et de distributeurs de gaz ou des combinaisons de celles-ci sont utilisées en tant que composants internes non soumis à pression, et le temps de séjour du/des réactifs gazeux dans la cuve de réaction est augmenté par les composants internes non soumis à pression, et les composants internes non soumis à pression sont ordonnés de telle sorte qu'ils sont entourés par le réactif liquide, la cuve de réaction contenant trois à 100 composants internes non soumis à pression les uns au-dessus des autres, et la taille des composants internes augmentant dans la direction d'écoulement du réactif gazeux ascendant, les composants internes étant séparés par une paroi de la paroi de la cuve de réaction de telle sorte que le réactif liquide circule dans l'espace formé par l'écart entre lesdites parois dans la direction inverse à la direction ascendante du réactif gazeux ascendant.

2. Cuve de réaction, dans laquelle des distributeurs de gaz sont installés entre les zones de collecte de gaz et les zones de capture de gaz.

3. Cuve de réaction selon la revendication 1, dans laquelle les composants internes sont fixés à un ou plusieurs tubes intérieurs et sont disposés dans le contenant sous pression.

4. Cuve de réaction selon la revendication 1, dans laquelle un catalyseur se trouve dans la zone de collecte de gaz.

5. Cuve de réaction selon la revendication 4, dans laquelle le catalyseur est un catalyseur d'hydrogénation résistant au soufre.

6. Cuve de réaction selon la revendication 5, dans laquelle le catalyseur est constitué par un support et contient un ou plusieurs des éléments actifs molybdène, nickel, tungstène, fer, vanadium, cobalt, soufre, sélénium, phosphore, arsenic, antimoine et bismuth.

7. Utilisation d'une cuve de réaction selon les revendications 1 à 6 pour la réaction de soufre liquide avec de l'hydrogène gazeux pour former du sulfure d'hydrogène.
